# EUROPÄISCHE PATENTSCHRIFT

(11) **EP 0 691 877 B1**
(45) Veröffentlichungstag und Bekanntmachung des Hinweises auf die Patenterteilung: **18.12.1996**
(21) Anmeldenummer: 94909933.7
(22) Anmeldetag: 05.03.1994
(51) Int. Cl.: B01D 35/027

(54) **RÜCKLAUFFILTER FÜR FLÜSSIGKEITEN**
BACK-FLOW FILTER for fluids
FILTRE DE RETOUR POUR LIQUIDES

(30) Priorität: 30.03.1993 DE 4310234
(43) Veröffentlichungstag der Anmeldung: 17.01.1996
(73) Patentinhaber: ARGO GmbH für Fluidtechnik, 76703 Kraichtal-Menzingen (DE)
(72) Erfinder: DLUZIK, Klaus, D-76707 Hambrücken (DE)
(74) Vertreter: Hoeger, Stellrecht & Partner
(86) Internationale Anmeldenummer: EP9400656
(87) Internationale Veröffentlichungsnummer: WO9422550

(56) Entgegenhaltungen:
- EP-A- 0 347 872
- EP-A- 0 512 639
- DE-C- 3 542 449
- US-A- 3 288 291

## Beschreibung

Die Erfindung betrifft einen Rücklauffilter für Flüssigkeiten, insbesondere Hydraulikflüssigkeiten, mit einem auf einem Flüssigkeitsbehälter befestigbaren Filterkopf, mit einem auf der einen Seite des Filterkopfes angeordneten Filtertopf, mit einem auf der anderen Seite des Filterkopfes lösbar angeordneten Deckel, mit einem im Filterkopf und im Filtertopf durchgehend angeordneten Filterelement, mit wenigstens einem am Filterkopf ausgebildeten Einlaß für die rücklaufende Flüssigkeit, mit einem am Filterkopf ausgebildeten Luftdurchlaß, mit einem in diesen Durchlaß eingesetzten Belüftungsfilter und mit einem den Luftdurchlaß umschließenden, mit dem Filterkopf einstückigen, durch einen Deckel verschließbaren Gehäuse, wobei Filterkopf, Filtertopf und Filterdeckel aus Kunststoff bestehen.

Ein derartiger Rücklauffilter für Flüssigkeiten ist aus EP-A-0 512 639 bekannt. Zum Anschluß von Leitungen für die rücklaufende Flüssigkeit müssen im Filterkopf Bohrungen und aufwendige, mit Gewinde versehene Einsätze zur Aufnahme der Rücklaufleitung vorgesehen werden. Ferner sind die Belüftungsöffnungen dieser Filter bezüglich ihres Aufbaues aufwendig und teuer. Von Nachteil kann es bei dem bekannten Filter sein, daß bei einem Einsatz im Freien Regenwasser oder Reinigungsflüssigkeit eindringen und zu einer Verschmutzung führen. Schließlich erfordert bei dem bekannten Rücklauffilter die Befestigung des Deckels umständliche Vorkehrungen.

Aus DE 30 19 141 A1 ist ein Filter anderer Art mit einem Schlauchnippel zum Anschluß einer Rücklaufleitung bekannt. Die DE 35 42 449 C1 zeigt ein Flüssigkeitsfilter, bei dem, z.B. zum Anschluß eines Manometers, ein weiterer Anschluß vorgesehen ist. Aus US 4,361,483 ist eine Filteranordnung bekannt, bei welcher Stutzen durch Verschlußkappen abdeckbar sind. Schließlich ist zwar in EP-0 347 872 A1 ein Gehäuse mit Schlitzen und einem Deckel bekannt, wobei aber zungenartige Gehäuseendstücke keine Rastfunktion für den Deckel erfüllen.

Es ist Aufgabe der Erfindung, einen gattungsgemäßen Rücklauffilter so auszubilden, daß er einfach und preisgünstig herzustellen, leicht handhabbar ist und bei vollkommener Abdeckung gegenüber Verschmutzung eine leichte Befestigung des Deckels ermöglicht.

Die Aufgabe wird bei einem gattungsgemäßen Rücklauffilter dadurch gelöst, daß
(a) am Einlaß für die rücklaufende Flüssigkeit ein mit dem Filterkopf einstückiger Schlauchnippel ausgebildet ist,
(b) der das Gehäuse des Luftdurchlasses verschließende Deckel den Belüftungsfilter trägt, und
(c) lediglich an der Unterseite der Wand des Gehäuses zum Deckel hin offenen Schlitze vorgesehen sind, die sowohl einen Luftdurchtritt vermitteln als auch ein lösbares Einklipsen des Deckels in das Gehäuse ermöglichen.

Die nachfolgende Beschreibung bevorzugter Ausführungsformen der Erfindung dient im Zusammenhang mit beiliegender Zeichnung der weiteren Erläuterung. Es zeigen:
- Fig. 1: eine teilweise geschnittene Seitenansicht eines Rücklauffilters für Flüssigkeiten;
- Fig. 2: eine teilweise entlang der Linie 2-2 in Fig. 1 geschnittene Darstellung eines Filterkopfes;
- Fig. 3: eine Untenansicht eines Filterkopfes;
- Fig. 4: eine entlang der Linie IV-IV in Fig. 3 geschnittene Darstellung eines Filterkopfes.

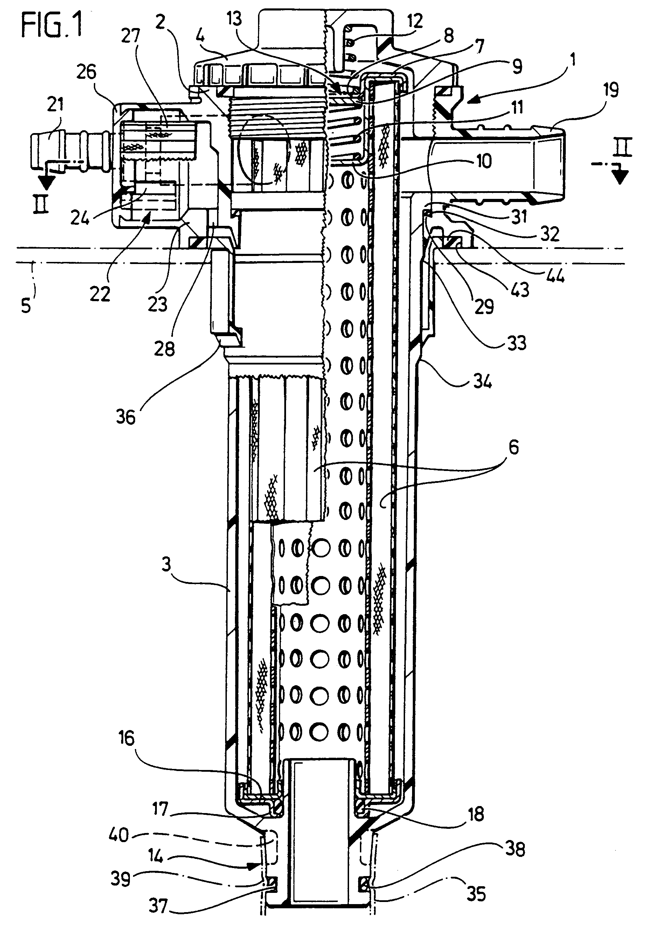

Wie aus Fig. 1 hervorgeht, umfaßt ein Rücklauffilter 1 für Flüssigkeiten einen im wesentlichen kreiszylinderförmigen Filterkopf 2, auf dessen einer Seite ein ebenfalls kreiszylinderförmiger Filtertopf 3 angeordnet ist, der an seinem freien, dem Filterkopf 2 abgekehrten Ende konisch verläuft und in einen vom Filtertopf 3 abstehenden Auslaßstutzen 14 mündet. Auf der anderen Seite des Filterkopfes 2 ist ein Deckel 4 mit dem Filterkopf 2 durch Verschraubung lösbar verbunden. Der Rücklauffilter 1 ist in der Öffnung einer horizontalen Wand 5 eines Hydraulikflüssigkeitsbehälters befestigt. Sowohl der Filterkopf 2 als auch der Filtertopf 3 und der Deckel 4 bestehen aus Kunststoff.

Im Filterkopf 2 und im Filtertopf 3 ist durchgehend ein an sich bekanntes Filterelement 6 angeordnet. Das Filterelement 6 ist an seiner oberen, dem Deckel 4 zugewandten Stirnseite in ein ringförmiges Blech 7 eingeklebt, welches die obere Stirnseite des Filterelementes 6 umschließt. Das ringförmige Blech 7 weist eine zentrale kreisrunde Öffnung 8 auf, die von unten her durch eine kreisförmige Scheibe 9 verschließbar ist. Die Scheibe 9 wird durch die Kraft einer von einem Blechbügel 10 gehaltenen Schraubenfeder 11 in Richtung des Deckels 4 - in Fig. 1 nach oben - gedrückt, so daß sie normalerweise die Öffnung 8 verschließt. Zwischen dem Deckel 4 und dem ringförmigen Blech 7 ist eine konische Schraubenfeder 12 angeordnet, die das ringförmige Blech 7 zusammen mit dem Filterelement 6 vom Deckel 4 weg in das Innere des Filtertopfes 3 einspannt. Das ringförmige Blech 7 mit dessen zentraler Öffnung 8 und die von der Feder 11 gegen die Öffnung 8 gedrückte Scheibe 9 wirken zusammen als ein Bypassventil 13. Das Bypassventil 13 öffnet beispielsweise, wenn das zu filtrierende Hydrauliköl in kaltem Zustand eine hohe Viskosität aufweist und zur Vermeidung einer Beschädigung des Filterelements 6 an diesem vorbeigeleitet werden muß. Der Hydraulikölstrom gelangt in diesem Fall nicht durch das Filterelement 6, sondern an diesem vorbei durch das Bypassventil 13 direkt zum Auslaßstutzen 14.

An seiner anderen, dem Deckel 4 abgewandten und dem Auslaßstutzen 14 zugewandten Stirnseite ist das Filterelement 6 in ein weiteres ringförmiges Blech 16 eingeklebt, das eine in den Filtertopf 3 hineinragende Verlängerung des Auslaßstutzens 14 umgibt. Auf der dem Filterelement 6 abgewandten Seite des ringförmigen Bleches 16 ist ein von diesem rechtwinklig abstehendes, ebenfalls ringförmiges Blech ausgebildet, welches rechtwinklig hin zur in den Filtertopf 3 hineinreichenden Verlängerung des Auslaßstutzens 14 gebogen ist und zur Aufnahme einer Ringdichtung 18 dient. Das ringförmige Blech 16, das Blech 17 und die Ringdichtung 18 bilden eine Abdichtung des Filterelementes 6 mit der in den Filtertopf 3 und das Filterelement 6 hineinreichenden Verlängerung des Außlaßstutzens 14.

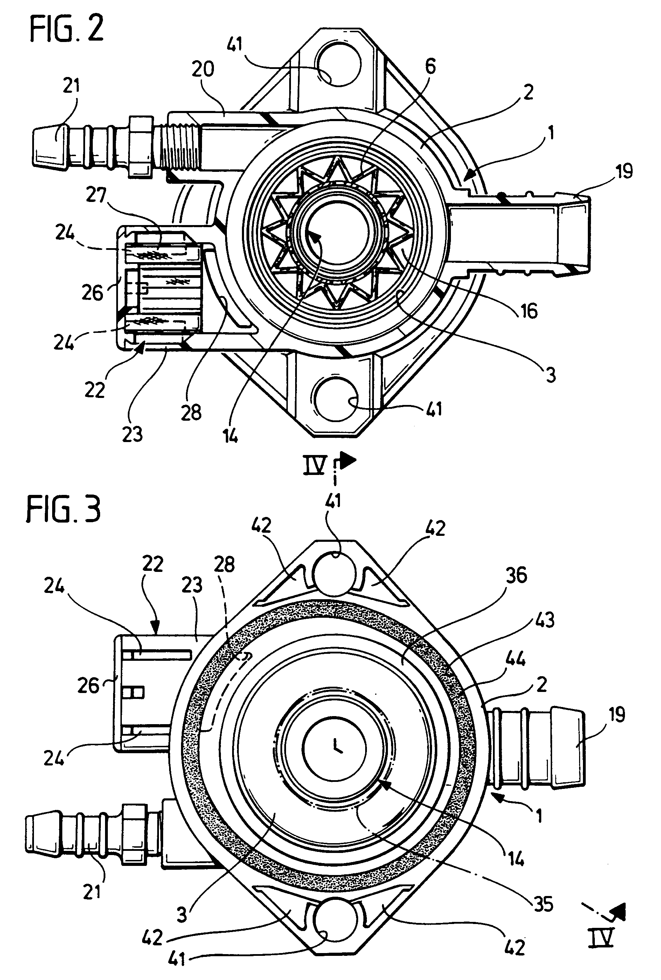

Am Filterkopf 2 ist mit diesem einstückig ein Schlauchnippel 19 für rücklaufende Hydraulikflüssigkeit angeordnet, auf den ein Schlauch aufgeschoben und mit einer an sich bekannten Schelle oder dgl.befestigt wird. Da der Filterkopf 2 aus Kunststoff besteht, ist der einstückig mit ihm verbundene Schlauchnippel 19 billig ohne zusätzlichen Aufwand zusammen mit ihm herzustellen, und es ergeben sich auch keine Probleme mit der Dichtheit der an den Filterkopf 2 angeschlossenen Leitung für die rücklaufende Hydraulikflüssigkeit. Darüber hinaus ist die Leitung für die rücklaufende Hydraulikflüssigkeit in Form eines Schlauches auf dem Schlauchnippel 19 leicht zu befestigen. Eine derartige Befestigung der Leitung für die rücklaufende Flüssigkeit weist gegenüber den bekannten einschraubbaren Schlauchbefestigungen insbesondere den Vorteil schneller Montage auf. Wie aus Fig. 2 ersichtlich, ist am Filterkopf 2 ein Stutzen 20 zur wahlweisen Aufnahme eines weiteren Schlauchnippels 21 ausgebildet, auf den eine weitere Ölrücklaufleitung in Form eines Schlauches aufgeschoben werden kann. Statt des Schlauchnippels 21 kann auch ein nicht dargestelltes Manometer zur Überwachung des Rücklaufdrucks der Hydraulikflüssigkeit und somit der Elementverschmutzung in den bei Herstellung des Kunststoff-Filterkopfes 2 zunächst verschlossenen Stutzen 20 eingesetzt werden.

Wie insbesondere aus den Fig. 1 und 2 hervorgeht, ist am Filterkopf 2 ein Luftdurchlaß 22 vorgesehen, der von einem mit dem Filterkopf 2 einstückigen Gehäuse 23 umschlossen ist. In den Wänden des Gehäuses 23 sind lediglich nach unten offene Schlitze 24 vorgesehen, die zu einem den Durchlaß 22 stirnseitig verschließenden Deckel 26 (siehe Fig. 2 und 3) hin führen. Die Schlitze 24 sind einerseits mit dem Luftdurchlaß 22 verbunden und ermöglichen andererseits ein lösbares Einklipsen des Deckels 26 in das Gehäuse 23, so daß zusätzliche Befestigungselemente für den Deckel überflüssig sind (Fig. 3). Mit dem Deckel 26 ist ein sternförmig gefalteter Belüftungsfilter 27 an seiner einen Stirnseite freitragend verklebt. Der vorzugsweise aus Papier bestehende Belüftungsfilter 27 verhindert ein Eindringen von Schmutzpartikeln in den Rücklauffilter 1 und damit eine Verschmutzung der Hydraulikflüssigkeit.

Wie aus den Fig. 1, 2 und 3 hervorgeht, dient ein in Umfangsrichtung im Filterkopf 2 angeordneter, mit dem Luftdurchlaß 22 verbundener Belüftungsschlitz 28 dem Durchtritt von Luft in das Innere des Rücklauffilters 1 oder umgekehrt. Die Schlitze 24 sind nur nach unten geöffnet (siehe Fig. 1), so daß bei einem Einsatz des Rücklauffilters im Freien kein Regenwasser und beim Reinigen keine Reinigungsflüssigkeit durch den Durchlaß 22 eindringen kann.

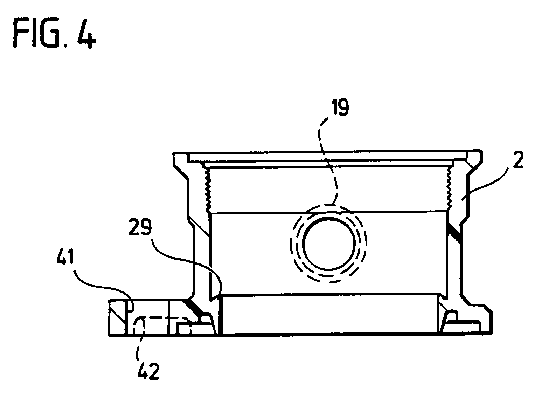

Wie insbesondere aus Fig. 1 und Fig. 4 hervorgeht, ist an der inneren Umfangsfläche des Filterkopfes 2 eine ringförmig umlaufende Dichtkante 29 ausgebildet, der ein am Filtertopf 3 zu ihr komplementär ausgebildeter Vorsprung 31 gegenüberliegt. Zur Abdichtung des Filterkopfes 2 gegen den Filtertopf 3 ist in einem zwischen der Dichtkante 29 und dem Vorsprung 31 ausgebildeten Zwischenraum eine Ringdichtung 32 angeordnet.

Wie in Fig. 1 gezeigt, umfaßt der Filtertopf 3 drei axial aneinandergrenzende Bereiche mit jeweils relativ zueinander abgestuftem Durchmesser, wobei der Durchmesser des dem Auslaßstutzen 14 am nächsten angeordneten Bereichs am kleinsten und der Durchmesser des dem Auslaßstutzen am entferntesten angeordneten Bereichs am größten ist. Eine erste Stufe 33 des Filtertopfes 2 ist im montierten Zustand des Filters der Öffnung der Flüssigkeitsbehälterwand 5 benachbart. Eine zweite Stufe 34 ist benachbart zu einem den Filtertopf 3 umgebenden Ölabstreifer 36 angeordnet.

Die stufenförmige Querschnittsform des Filtertopfes 3 ermöglicht ein leichtes Herausziehen aus dem Filterkopf 2.

Dies ist insbesondere dann vorteilhaft, wenn das Kunststoffmaterial des Filtertopfes 3 im Laufe der Zeit etwas fließt und sich dadurch eine Vergrößerung des Durchmessers des Filtertopfes 3 ergibt.

Das Herausziehen des gesamten Filtertopfes 3 ist deshalb besonders vorteilhaft, weil nach Entfernen des Filterelementes 6 das Innere des Filtertopfes 3 zunächst gründlich gereinigt werden kann, bevor ein neues Filterelement 6 in den Filtertopf 3 eingebracht wird. Dadurch wird insbesondere vermieden, daß bereits verschmutztes Hydrauliköl in den Hydraulikflüssigkeitsbehälter zurückgelangt.

Am freien, dem Filterkopf 2 abgekehrten Ende des Filtertopfes 3 ist eine Rohrverlängerung vorgesehen, deren Länge und Form auf unterschiedliche Größen verschiedener Flüssigkeitsbehälter anpaßbar ist. Die Rohrverlängerung besteht aus einem Metallrohr 35, das auf den Auslaßstutzen 14 des Filtertopfes 3 aufgeschoben wird und mit seinem freien Ende in die Hydraulikfklüssigkeit eintaucht. Der Auslaßstutzen 14 weist eine in Umfangsrichtung verlaufende Ringnut 37 auf, in die eine Ringdichtung 38 eingelegt wird. Am auf den Auslaßstutzen aufgeschobenen Metallrohr 35 wird im Bereich der Ringdichtung 38 nachträglich eine radial einwärts vorstehende Sicke 39 erzeugt, die etwas in die Ringnut 37 hineinreicht und einerseits in Verbindung mit der Ringnut 37 und der Ringdichtung 38 eine Abdichtung des Metallrohrs 35 gegen den Auslaßstutzen 14 vermittelt, andererseits das Metallrohr 35 fest auf dem Auslaßstutzen 14 hält. Wegen der nachträglichen Erzeugung der Sicke 39 kann das Metallrohr 35 zunächst leichtgängig über die Ringdichtung 38 aufgeschoben werden.

Am äußeren Umfang des Auslaßstutzens 14 sind zwischen der Ringnut 37 und der Wand des Filtertopfes 3 symmetrisch über den Umfang verteilte, derart konisch verlaufende Stege 40 angeordnet, daß der Außendurchmesser des Auslaßstutzens 14 in Richtung der Ringnut 37 kontinuierlich abnimmt. Das Metallrohr 35 wird aufgrund der konischen Form dieser Stege beim Aufschieben auf den Auslaßstutzen 14 in Richtung des Filterkopfes 2 aufgeweitet, wodurch ein fester, spielfreier und und nach Erzeugung der Sicke 39 auch dichter Sitz des Metallrohres 38 auf dem Auslaßstutzen 14 erzielt wird.

Wie aus Fig. 2 und 3 hervorgeht, sind am Filterkopf 2 einstückig Anschraubösen 41 zur Verbindung des Rücklauffilters 1 mit der Wand 5 des Flüssigkeitsbehälters vorgesehen, die zur Vermeidung einer Spannungsübertragung auf den Filterkopf 2, was zu einer Deformierung des Filterkopfes 2 und dadurch zu Undichtigkeiten führen kann, elastisch verformbar sind. Dazu sind im Bereich der Anschraubösen 41 Materialschwächungen 42 vorgesehen (Fig. 3 und 4). Die durch die Materialschwächungen ermöglichte elastische Verformbarkeit der Anschraubösen 41 verhindert ein Verziehen des gesamten Filterkopfes 2 beim ungleichmäßigen Aufschrauben des Filterkopfes 2 auf den Flüssigkeitsbehälter und stellt damit sicher, daß der Deckel 4 leicht eingeschraubt und wieder herausgedreht werden kann.

Wie aus Fig. 1 und Fig. 3 hervorgeht, befindet sich im Filterkopf 2 eine nahezu kreisringförmige Nut 43, in die eine Ringdichtung 44 eingelegt wird, welche zur Abdichtung des Filterkopfes 2 gegen die Flüssigkeitsbehälterwand 5 dient.

## Patentansprüche

1. Rücklauffilter (1) für Flüssigkeiten, insbesondere Hydraulikflüssigkeiten, mit einen auf einem Flüssigkeitsbehälter befestigbaren Filterkopf (2), mit einem auf der einen Seite des Filterkopfes angeordneten Filtertopf (3), mit einem auf der anderen Seite des Filterkopfes lösbar angeordneten Deckel (4), mit einem im Filterkopf und im Filtertopf durchgehend angeordneten Filterelement (6), mit wenigstens einem am Filterkopf ausgebildeten Einlaß (19) für die rücklaufende Flüssigkeit, mit einem am Filterkopf ausgebildeten Luftdurchlaß (22), mit einem in diesen Durchlaß eingesetzten Belüftungsfilter (27) und mit einem den Luftdurchlaß umschließenden, mit den Filterkopf einstückigen, durch einen Deckel (26) verschließbaren Gehäuse (23), wobei Filterkopf, Filtertopf und Filterdeckel aus Kunststoff bestehen,
**dadurch gekennzeichnet, daß**
a) am Einlaß für die rücklaufende Flüssigkeit ein mit dem Filterkopf (2) einstückiger Schlauchnippel (19) ausgebildet ist;
b) der das Gehäuse (23) des Luftdurchlasses (22) verschließende Deckel (26) den Belüftungsfilter (27) trägt, und
c) lediglich an der Unterseite der Wand des Gehäuses (23) zum Deckel (26) hin offene Schlitze (24) vorgesehen sind, die sowohl einen Luftdurchtritt vermitteln als auch ein lösbares Einklipsen des Deckels (26) in das Gehäuse (23) ermöglichen.

2. Rücklauffilter nach Anspruch 1, dadurch gekennzeichnet, daß am Filterkopf (2) einstückig ausgebildete, der Verbindung mit einer Wand (5) des Flüssigkeitsbehälters dienende Anschraubösen (41) zur Vermeidung einer Spannungsübertragung auf den Filterkopf (2) durch Querschnittsreduzierungen und Unterbrechungen von Verstärkungsrippen elastisch verformbar sind.

3. Rücklauffilter nach Anspruch 1, dadurch gekennzeichnet, daß der Filtertopf (3) zur Erleichterung des Herausziehens aus dem Filterkopf (2) und aus einem Ölabstreifer (36) eine stufenförmige Querschnittsform hat.

4. Rücklauffilter nach Anspruch 1, dadurch gekennzeichnet, daß am Filterkopf (2) einstückig eine Dichtkante (29) ausgebildet ist, die gegen den Filtertopf (3) abdichtet, und zwischen dem Deckel (4) und einem ringförmigen Blech (7) des Filterelements (6) eine Schraubenfeder (12) angeordnet ist, die das Filterelement vom Deckel weg in das Innere des Filtertopfes (3) einspannt.

5. Rücklauffilter nach Anspruch 1, dadurch gekennzeichnet, daß am Filterkopf (2) einstückig eine Ansatzstelle (20) für einen weiteren Schlauchnippel (21) oder ein Manometer ausgebildet ist.

6. Rücklauffilter nach Anspruch 1, dadurch gekennzeichnet, daß am freien, dem Filterkopf (2) abgekehrten Ende des Filtertopfes (3) eine Rohrverlängerung vorgesehen ist, bestehend aus einem Metallrohr (35), das auf einem vom Filtertopf (3) abstehenden Auslaßstutzen (14) unter Zwischenlegung einer Ringdichtung (38) aufgeschoben ist und der Ringdichtung (38) gegenüberliegend eine radial in Richtung der Ringdichtung (38) vorstehende Sicke (39) aufweist.

7. Rücklauffilter nach Anspruch 1, dadurch gekennzeichnet, daß der Belüftungsfilter (27) sternförmig ausgebildet und an seiner einen Stirnseite freitragend mit dem Deckel (26) verklebt ist.

## Claims

1. A return line filter (1) for liquids, in particular hydraulic liquids, having a filter head (2) attachable on a tank, having a filtering jug (3) disposed on the one side of the filter head, having a lid (4) detachably disposed on the other side of the filter head, having a filter element (6) disposed through the filter head and the filtering jug, having at least one inlet (19) for the returning liquid constructed on the filter head, having an air passage (22) constructed on the filter head, having an aeration filter (27) inserted into this passage and having a housing (23) which surrounds the air passage, is in one piece with the filter head and can be closed by a lid (26), whereby the filter head, filtering jug and filter lid are made from plastics,
**characterised in that**
(a) a hose stem (19) in one piece with the filter head (2) is constructed on the outlet for the returning liquid;
b) the lid (26) closing the housing (23) of the air passage (22) bears the aeration filter (27), and
c) slits (24) open to the lid (26), which bring about both a passage of air and also a detachable clipping of the lid (26) into the housing (3), are provided just at the underside of the wall of the housing (23).

2. A return line filter according to Claim 1,
**characterised in that** screw eyelets (41), constructed in one piece on the filter head (2) and serving for connection with a wall (5) of the tank, for avoiding the transmission of stress to the filter head (2) are elastically deformable by cross-sectional reductions and interruptions of reinforcing ribs.

3. A return line filter according to Claim 1,
**characterised in that** the faltering jug (3) has a step-shaped cross-sectional shape to assist withdrawal from the filter head (3) and from an oil wiper (36).

4. A return line filter according to Claim 1,
**characterised in that** a sealing edge (29), which provides a seal against the filtering jug (3), is constructed in one piece on the filter head (2) and a helical spring (12), which forces the filter element away from the lid into the interior of the filtering jug (3), is disposed between the lid (4) and an annular metal sheet (7) of the filter element (6).

5. A return line filter according to Claim 1,
**characterised in that** a neckpiece (20) for a further hose stem (21) or a manometer is constructed in one piece on the filter head (2).

6. A return line filter according to Claim 1,
**characterised in that** a pipe extension, consisting of a metal pipe (35), which is pushed on an outlet piece (14) projecting from the filtering jug (3) with the interposition of an annular seal (38) and opposite the annular seal (38) has a bead (39) protruding radially in the direction of the annular seal (38), is provided at the free end of the filtering jug (3) turned away from the filter head (2).

7. A return line filter according to Claim 1,
**characterised in that** the aeration filter (27) is constructed in a star shape and at its one end side is glued in cantilevered manner to the lid (26).

## Revendications

1. Filtre de retour (1) pour liquides, en particulier pour des liquides hydrauliques, comportant une tête (2) de filtre qui peut être fixée sur un réservoir de fluide, un corps (3) de filtre agencé sur l'un des côtés de la tête de filtre, un couvercle (4) agencé de façon détachable sur l'autre côté de la tête de filtre, un élément de filtre (6) agencé dans la tête de filtre et traversant le corps de filtre, au moins une entrée (19) formée sur la tête de filtre pour le fluide de retour, un passage d'air (22) formé sur la tête de filtre, un filtre d'aération (27) logé dans ce passage d'air et un carter (23) qui entoure le passage d'air, est d'un seul tenant avec la tête de filtre et peut être fermé par un couvercle (26), la tête de filtre, le corps de filtre et le couvercle de filtre étant en matière plastique,
caractérisé en ce que
a) un embout de raccordement pour tube souple (19), d'un seul tenant avec la tête (2) de filtre, est formé à l'entrée du liquide de retour;
b) le couvercle (26) qui ferme le carter (23) du passage d'air (22) porte le filtre d'aération (27), et
c) des fentes (24) ouvertes vers l'extérieur, qui, d'une part, servent au passage de l'air et, d'autre part, permettent un encliquetage détachable du couvercle (26), sont ménagées sur le seul côté inférieur de la paroi du carter (23).

2. Filtre de retour selon la revendication 1, caractérisé en ce qu'il est prévu des oeillets de vissage (41) formés d'un seul tenant sur la tête (2) de filtre, qui servent à la connexion à une paroi (5) du réservoir de fluide, ces oeillets étant déformables élastiquement grâce à des réductions de section transversale et des interruptions de nervures de renforcement, de manière à éviter une transmission de contraintes à la tête de filtre (2).

3. Filtre de retour selon la revendication 1, caractérisé en ce que la configuration de la section transversale du corps de filtre (3) est en gradins pour faciliter son extraction hors de la tête (2) de filtre et d'un racleur d'huile (36).

4. Filtre de retour selon la revendication 1, caractérisé en ce qu'une arête d'étanchéité (29), qui assure une étanchéité par rapport au corps de filtre, est formée d'un seul tenant sur la tête (2) de filtre, et un ressort hélicoïdal (12), qui sollicite l'élément de filtre (6) de manière à l'éloigner vers l'intérieur de la tête (3) de filtre, est disposé entre le couvercle (4) et une tôle annulaire (7) de l'élément de filtre (6).

5. Filtre de retour selon la revendication 1, caractérisé en ce qu'un emplacement (20) d'embase destiné à un autre embout de raccordement (21) pour tube souple ou à un manomètre, est formé d'un seul tenant sur la tête (2) de filtre.

6. Filtre de retour selon la revendication 1, caractérisé en ce que le corps (3) de filtre comporte, sur son extrémité libre opposée à la tête (2) de filtre, un prolongement tubulaire composé d'un tube métallique (35) qui est enfilé sur un piquage de sortie (14) dépassant du corps (3) de filtre, un joint d'étanchéité annulaire (38) étant interposé entre eux, et comporte, au niveau du joint d'étanchéité annulaire (38), un collet (39) en saillie en direction du joint d'étanchéité annulaire (38).

7. Filtre de retour selon la revendication 1, caractérisé en ce que le filtre d'aération (27) est en forme d'étoile, et il est collé en porte-à-faux par sa face frontale sur le couvercle (26).
